# EUROPÄISCHE PATENTSCHRIFT

(11) **EP 2 722 148 B1**
(45) Veröffentlichungstag und Bekanntmachung des Hinweises auf die Patenterteilung: **12.08.2015**
(21) Anmeldenummer: 13004802.8
(22) Anmeldetag: 05.10.2013
(51) Int. Cl.: B29C 45/14, B60J 10/08

(54) **Verfahren zur Herstellung eines einen Formteilstrang und ein Klebeband umfassenden Verbundteils, und ein solches Verbundteil**
Method of preparing a composite part comprising a moulding strand and adhesive tape, and such composite part
Procédé de fabrication d'une pièce composite comprenant une tige moulée et une bande adhésive, et une telle pièce composite

(30) Priorität: 18.10.2012 DE 102012109946
(43) Veröffentlichungstag der Anmeldung: 23.04.2014
(73) Patentinhaber: CQLT SaarGummi Technologies S.à.r.l., 5544 Remich (LU)
(72) Erfinder: Micout, Vincent, 66679 Losheim am See (DE); Schmidt, Tobias, 66636 Tholey-Lindscheid (DE)
(74) Vertreter: Wolff, Matthias

(56) Entgegenhaltungen:
- WO-A1-2004/058477
- JP-A- 2012 096 673
- US-A- 6 012 760

## Beschreibung

Die vorliegend Erfindung betrifft ein Verfahren zur Herstellung eines einen Formteilstrang und ein Klebeband umfassenden Verbundteils zum Einsatz als Dichtung oder/und Abdeckung in einer Fahrzeugkarosserie, wobei der Formteilstrang in einem Formwerkzeug spritzgegossen und zwischen dem Formteilstrang und dem Klebeband eine stoffschlüssige Verbindung hergestellt wird, wobei das Klebeband in dem Formwerkzeug unter Bildung eines den Formraum des Formwerkzeugs begrenzenden Wandabschnitts angeordnet wird.

Ein solches Verfahren ist aus der US 6,012,760 A bekannt, die den nächstkommenden Stand der Technik bildet. Hierbei wird ein Dichtungsstrang durch Extrusion hergestellt, der auf einer Ober- oder einer Unterseite eine ebene Fläche aufweist, auf welcher ein Klebeband aufgebracht wird. Auf der Seite, die dem Klebeband abgewandt ist, befindet sich im Querschnitt ein Hohlstrang sowie Verstärkungsrippen. Zur Herstellung eines gekrümmten Verbundteils wird ein Abschnitt aus dem Dichtungsstrang derart ausgeschnitten, dass im Querschnitt betrachtet die zuvor genannten Verstärkungsrippen und der Dichtabschnitt entfernt sind und lediglich ein bandförmiger Abschnitt aus dem Extrusionsmaterial zwischen zwei Dichtungsstrangabschnitten verbleibt, auf dessen äußerer Seitenwand das Klebeband befestigt ist. Der so erhaltene und ausgeschnittene Dichtungsstrang wird in eine Spritzform derart eingelegt, dass Längsachsen der Dichtungsstrangabschnitte, welche noch über den bandförmigen Abschnitt verbunden sind, senkrecht zueinander stehen. Im folgenden Verfahrensschritt wird ein Elastomermaterial an die dem Klebeband abgewandte Seite des bandförmigen Abschnitts angespritzt, so dass ein Verbundteil entsteht, welches im Querschnitt die Geometrie des ursprünglichen Dichtungsstrangs aufweist, so dass trotz der Abwinklung um 90° ein über den Dichtungsstrang konstanter Querschnitt vorliegt.

Ferner ist ein solches Verfahren aus der WO 2004/058477 A1 bekannt. Zuerst wird ein extrudierter Dichtungsstrang hergestellt, der auf einer unteren Seite einen Profilfuß aufweist, auf dessen äußere Seite ein doppelseitiges Klebeband aufgebracht wird. Auf der dem Klebeband abgewandten Seite sind an den Profilfuß Dichtlippen sowie ein eine Hohlkammer aufweisender Dichtungsabschnitt angeformt. Zur Herstellung eines Verbundteils wird ein oberer Teil des Dichtungsstrangs oberhalb des Profilfußes ausgestanzt. Der so hergestellte Dichtungsstrang wird danach in eine Spritzgussform derart eingelegt, dass Längsachsen von Dichtungsstrangabschnitten, welche über den Profilfuß und das auf den Profilfuß aufgeklebte Klebeband weiterhin verbunden sind, in einem zuvor festgelegten Winkel zueinander stehen. Danach wird ein thermoplastisches Elastomermaterial eingespritzt, so dass ein abgewinkeltes Verbundteil hergestellt wird, welches einen konstanten Querschnitt aufweist, der dem des ursprünglichen Dichtungsstrangs entspricht. Auch bei diesem Verfahren ist zwischen dem Klebeband und dem eingespritzten Material eine Zwischenschicht aus Extrusionsmaterial angeordnet.

Bei durch Benutzung bekannter Vorfertigung mit einem Klebeband versehener Formteilstränge für Dichtungszwecke wird das Klebeband mit dem Formteilstrang nach dessen Herstellung durch Spritzgießen in einem aufwendigen Handarbeitsgang verklebt. Der Aufwand hierfür ist besonders hoch, wenn der Formteilstrang von einer geraden Form abweicht und gekrümmt, insbesondere dreidimensional gebogen, ist.

Der Erfindung liegt die Aufgabe zugrunde, ein neues Verfahren zur Herstellung eines mit einem Klebeband vorgefertigten Formteilstrangs der eingangs genannten Art zu schaffen, das weniger Arbeitsaufwand erfordert.

Das diese Aufgabe lösende Verfahren ist dadurch gekennzeichnet, dass die stoffschlüssige Verbindung unmittelbar zwischen dem Formteilstrang und dem Klebeband durch Anspritzen des Formteilstrangs an das Klebeband hergestellt wird. Vorteilhaft entsteht im Ergebnis des Spritzgießens ein den Formteilstrang und das Klebeband umfassendes Verbundteil in einem einzigen Arbeitsgang. Der Aufwand für die Platzierung des Klebebands in dem Formwerkzeug ist gering im Vergleich mit dem Aufwand für die nachträgliche Verklebung von Formteilstrang und Klebeband gemäß dem Stand der Technik.

Zweckmäßig wird das Klebeband in dem Formwerkzeug in einen das Klebeband haltenden Sitz eingelegt. Der Sitz erleichtert die Platzierung und sichert überdies selbsttätig die korrekte Lage des Klebebandes innerhalb des Formwerkzeugs.

Insbesondere wird das Klebeband in dem Formwerkzeug in eine Nut, insbesondere hinterschnittene Nut, eingelegt. In der Nut lässt sich ist das Klebeband durch Klemmung festhalten, wobei die Hinterschneidung zusätzlich für einen Formschluss sorgt.

Zweckmäßig wird die Nut nach dem Einlegen des Klebebandes und vor dem Anspritzen des Formteilstrangs nochmals verengt, so dass die Haltekraft weiter erhöht und eine stabile Positionierung des Klebebandes während des Spritzvorgangs gesichert ist. Das Formwerkzeug kann entsprechend bewegliche Elemente aufweisen, welche zur Veränderung der Nutbreite verschiebbar sind.

So kann zweckmäßig die Nut bei der Entformung des mit dem Klebeband stoffschlüssig verbundenen Formteilstrangs wieder verbreitert werden, so dass sich das hergestellte Verbundteil aus Formteilstrang und Klebeband leicht und schonend entformen lässt.

Zweckmäßig wird beim Spritzgießen des Formteilstrangs Material an mehreren Stellen in den Formraum eingeleitet, um eine schnelle und vollständige Ausfüllung des Formraums zu sichern.

Zur sicheren Halterung des Klebebandes innerhalb eines Formwerkzeugs können auch das Klebeband ansaugende, mit Unterdruck oder Vakuum beaufschlagbare Kanäle dienen.

Insbesondere wird beim Spritzgießen des Formteilstrangs Material in den Formraum unter Vorbeiführung des Einleitungsstrahls an dem durch das Klebeband gebildeten Formwandabschnitt eingeleitet. Auf diese Weise wird verhindert, dass die Formraumwand durch den eingespritzten Materialstrang ungewollt deformiert wird.

Der durch das Klebeband gebildete Formwandabschnitt kann zur Herstellung der stoffschlüssigen Verbindung beim Spritzgießen des Formteilstrangs angeschmolzen oder/und chemisch verändert werden.

Der Formteilstrang des nach dem Verfahren hergestellten Verbundteils nach der Erfindung besteht vorzugsweise aus einem thermoplastischen Material, das sich im Formwerkzeug schnell abkühlt und verfestigt.

Es versteht sich, dass ein Formteilstrang für Dichtungszwecke zweckmäßig aus einem thermoplastischen Elastomermaterial hergestellt wird.

Dem Klebeband können über die genannte Klebefunktion hinaus beliebige anderen Funktionen zukommen, z.B. eine Polsterung.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein einen Formteilstrang und ein Klebeband umfassendes Verbundteil nach der Erfindung in einer Querschnittsansicht,
- Fig. 2: das Verbundteil von Fig. 1 in einer Seitenansicht, und
- Fig. 3: eine die Herstellung des Verbundteils von Fig. 1 und 2 in einem Formwerkzeug erläuternde Darstellung.

Ein als Wasserabweiser an einem Karosseriespalt dienender, zur Klebebefestigung vorgesehener Formteilstrang 1 aus thermoplastischem Elastomermaterial ist mit einem Klebeband 2 vorgefertigt. Die dem Formteilstrang 1 abgewandte Klebefläche des Klebebandes deckt ein Schutzfolienstreifen 3 ab. Eine mit dem Schutzfolienstreifen 3 verbundene Grifflasche 4, die über ein Ende des Formteilstrangs 1 hinausragt, erleichtert das Abziehen des Schutzfolienstreifens 3 von der Klebefläche vor der Klebebefestigung des Formteilstrangs 1 bei dem Karosseriespalt.

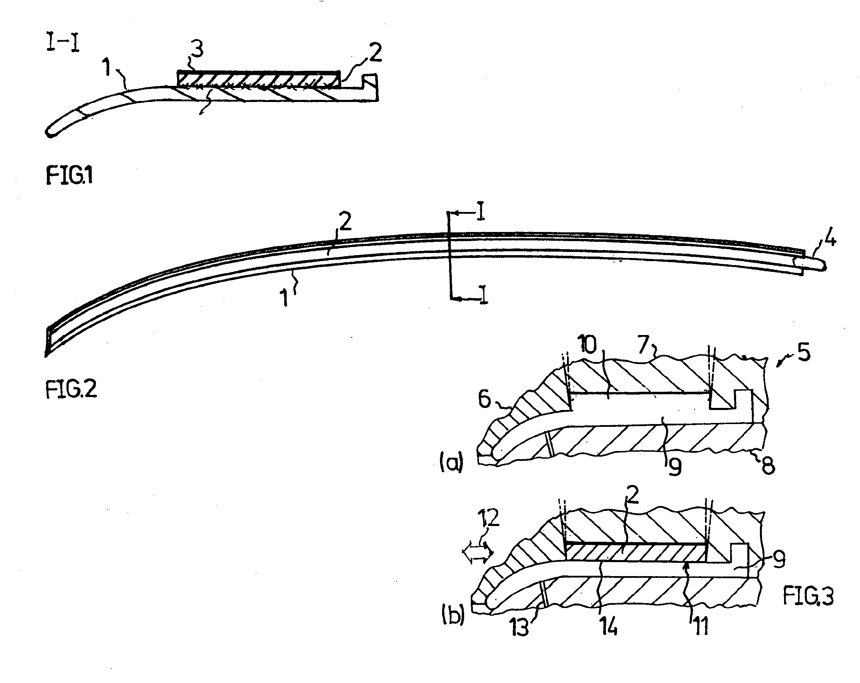

Der Formteilstrang 1 ist, wie aus Fig. 2 ersichtlich, in der Papierebene gekrümmt. Eine Krümmung besteht auch senkrecht dazu. Angepasst an die Krümmung des Formteilstrangsl ist das Klebeband 2 als gebogener Strang aus Lagenmaterial ausgeschnitten, z.B. mit Hilfe eines Laserstrahls.

Der Fertigung des Formteilstrangs 1 mit dem Klebeband 2 als Verbundteil dient ein in Fig. 3 ausschnittsweise dargestelltes Formwerkzeug 5. Mehrere Formelemente 6 bis 8 bilden einen Formraum 9 sowie eine zu dem Formraum 9 offene Nut 10 als Aufnahmeraum für das Klebeband 2. Das eingelegte Klebeband 2 bildet dann einen Abschnitt 11 der Formwand des Formraums 9.

Wie insbesondere Fig. 3b erkennen lässt, sorgt die hinterschnittene Nut 10 für eine das Klebeband 2 beim Spritzvorgang stabil an Ort und Stelle haltende Verklemmung sowie für eine Formschlusshalterung. Das Formelement 8 des Formwerkzeugs 5 lässt sich gemäß Pfeil 12 verschieben.

Bei der Herstellung des in den Fig. 1 und 2 gezeigten, das Klebeband 2 und den Formteilstrangs 1 umfassenden Verbundteils mit Hilfe des Formwerkzeugs 5 wird zunächst das entsprechend der vorgesehenen Krümmung des Formteilstrangs 1 geformte, als Ausschnitt aus Lagenmaterial hergestellte Klebeband 2 in den Aufnahmeraum bzw. die Nut 10 eingelegt, wozu die Nut 10 durch Verschiebung des Formelements 6 seitlich aufgeweitet wird, um das Einlegen zu erleichtern. Die seitliche Aufweitung erfolgt allerdings nur so weit, dass noch ein gewisser Einrasteffekt verbleibt, der eine ausreichende Haftung des Klebebandes 2 in der verbreiterten Nut 10 sichert. Abschließend wird das Formelement 6 unter festerer Verklemmung und Formeinschluss des Klebebands 2 in der Nut 10 in die Ausgangsstellung zurückverschoben.

Es folgt ein Spritzvorgang, bei dem flüssiges Elastomermaterial an mehreren, über die Stranglänge verteilten Stellen in den Formraum 9 eingespritzt wird, wobei Einspritzkanäle 13 so angeordnet sind, dass der eingespritzte Materialstrahl nicht direkt auf den durch das Klebeband 2 gebildeten Wandabschnitt 11 des Formraums 9 gelangt. Unerwünschte Verformungen des Wandabschnitts 11 werden dadurch vermieden.

Das heiße Elastomermaterial schmilzt die Oberfläche des Klebebandes 2 an, so dass bei 15 eine stoffschlüssige Verbindung zwischen dem Formteilstrang 1 und dem Klebeband 2 entsteht. Zur Entstehung dieser Verbindung kann eine gesonderte, leicht anschmelzbare Schicht 14 an der dem Formraum 9 zugewandten Oberfläche des Klebebands 2 gebildet sein. Zur stoffschlüssigen Verbindung kann auch eine chemische Reaktion mit einer solchen Schicht beitragen.

Bei der Entformung des gebildeten Verbundteils wird das Formelement 6 gemäß Pfeil 12 unter Verbreiterung der Nut 10 verschoben, so dass das mit dem Formteilstrang 1 verbundene Klebeband 2 bequem aus der Nut 10 entfernt werden kann.

## Patentansprüche

1. Verfahren zur Herstellung eines einen Formteilstrang (1) und ein Klebeband (2) umfassenden Verbundteils zum Einsatz als Dichtung oder/und Abdeckung in einer Fahrzeugkarosserie, wobei der Formteilstrang (1) in einem Formwerkzeug (5) spritzgegossen und zwischen dem Formteilstrang (1) und dem Klebeband (2) eine stoffschlüssige Verbindung hergestellt wird, wobei das Klebeband (2) in dem Formwerkzeug (5) unter Bildung eines den Formraum (9) des Formwerkzeugs (5) begrenzenden Wandabschnitts (11) angeordnet wird,
**dadurch gekennzeichnet,**
**dass** die stoffschlüssige Verbindung unmittelbar zwischen dem Formteilstrang (1) und dem Klebeband (2) durch Anspritzen des Formteilstrangs (1) an das Klebeband (2) hergestellt wird.

2. Verfahren nach Anspruch 1,
**dadurch gekennzeichnet,**
**dass** das Klebeband (2) in einen das Klebeband (2) haltenden Sitz (10) in dem Formwerkzeug (5) eingelegt wird.

3. Verfahren nach Anspruch 1 oder 2,
**dadurch gekennzeichnet,**
**dass** das Klebeband (2) in dem in eine zu dem Formraum (9) des Formwerkzeugs (5) offene Nut, insbesondere hinterschnittene Nut (10), eingelegt wird.

4. Verfahren nach Anspruch 3,
**dadurch gekennzeichnet,**
**dass** die hinterschnittene Nut (10) nach dem Einlegen des Klebebandes (2) und vor dem Einspritzen des Formteilstrangs (1) verengt wird.

5. Verfahren nach Anspruch 3 oder 4,
**dadurch gekennzeichnet,**
**dass** das Klebeband (2) beim Einlegen in der hinterschnittenen Nut (10) einrastet.

6. Verfahren nach einem der Ansprüche 3 bis 5,
**dadurch gekennzeichnet,**
**dass** die hinterschnittene Nut (10) zur der Entformung des mit dem Klebeband (2) stoffschlüssig verbundenen Formteilstrangs (1) verbreitert wird.

7. Verfahren nach einem der Ansprüche 1 bis 6,
**dadurch gekennzeichnet,**
**dass** beim Spritzgießen des Formteilstrangs (1) Material an mehreren, über die Länge des Formraums (9) verteilten Stellen in den Formraum (9) eingeleitet wird.

8. Verfahren nach einem der Ansprüche 1 bis 7,
**dadurch gekennzeichnet,**
**dass** beim Spritzgießen des Formteilstrangs (1) Material in den Formraum (9) unter Vorbeiführung des Einspritzstrahls an dem durch das Klebeband (2) gebildeten Wandabschnitt (11) des Formraums (9) eingeleitet wird.

9. Verfahren nach einem der Ansprüche 1 bis 8,
**dadurch gekennzeichnet,**
**dass** der durch das Klebeband (2) gebildete Wandabschnitt (11) des Formraums (9) beim Spritzgießen des Formteilstrangs (1) unter Herstellung der stoffschlüssigen Verbindung zwischen dem Formteilstrang (1) und dem Klebeband (2) angeschmolzen oder/und chemisch verändert wird.

10. Verbundteil, umfassend einen in einem Formwerkzeug (5) durch Spritzgießen hergestellten Formteilstrang (1) und ein Klebeband (2), zum Einsatz als Dichtung oder/und Abdeckung in einer Fahrzeugkarosserie, wobei das Klebeband (2) einem Biegungsverlauf des Formteilstrangs (1) folgend stoffschlüssig mit dem Formteilstrang (1) verbunden ist,
**dadurch gekennzeichnet,**
**dass** die stoffschlüssige Verbindung zwischen dem Formteilstrang (1) und dem Klebeband (2) durch unmittelbares Anspritzen des Formteilstrangs (1) an das in dem Formwerkzeug (5) platzierte Klebeband (2) hergestellt ist.

11. Verbundteil nach Anspruch 10,
**dadurch gekennzeichnet,**
**dass** die stoffschlüssige Verbindung durch eine mit dem Klebeband (2) verbundene, durch das heiße Spritzmaterial anschmelzbare oder/und chemisch veränderbare Schicht (14) gebildet ist.

## Claims

1. Process for the production of a composite part comprising an elongate moulding (1) and an adhesive tape (2) and intended for use as seal or/and protective covering in bodywork of a vehicle, where the elongate moulding (1) is injection-moulded in a mould (5) and a coherent bond is produced between the elongate moulding (1) and the adhesive tape (2), where the adhesive tape (2) is arranged in the mould (5) to form a wall section (11) delimiting the mould cavity (9) of the mould (5),
**characterized in that**
the coherent bond is produced directly between the elongate moulding (1) and adhesive tape (2) via injection of the elongate moulding (1) onto the adhesive tape (2).

2. Process according to Claim 1,
**characterized in that**
the adhesive tape (2) is inserted into a seating (10), that holds the adhesive tape (2), in the mould (5).

3. Process according to Claim 1 or 2,
**characterized in that**
the adhesive tape (2) is inserted into a groove that is open to the mould cavity (9) of the mould (5), in particular undercut groove (10).

4. Process according to Claim 3,
**characterized in that**
after the insertion of the adhesive tape (2) and before the injection of the elongate moulding (1) the undercut groove (10) is narrowed.

5. Process according to Claim 3 or 4,
**characterized in that**
on insertion in the undercut groove (10) the adhesive tape (2) becomes locked into place.

6. Process according to any of Claims 3 to 5, **characterized in that**
for the demoulding of the elongate moulding (1) bonded coherently to the adhesive tape (2), the undercut groove (10) is widened.

7. Process according to any of Claims 1 to 6,
**characterized in that**
during the injection-moulding of the elongate moulding (1) material is introduced into the mould cavity (9) at a plurality of locations distributed over the length of the mould cavity (9).

8. Process according to any of Claims 1 to 7,
**characterized in that**
during the injection-moulding of the elongate moulding (1), when the material is introduced into the mould cavity (9) the injected jet is past over the wall section (11) formed by the adhesive tape (2) in the mould cavity (9).

9. Process according to any of Claims 1 to 8,
**characterized in that**
during the injection-moulding of the elongate moulding (1) with production of the coherent bond between the elongate moulding (1) and adhesive tape (2) the wall section (11) formed by the adhesive tape (2) in the mould cavity (9) is incipiently melted or/and is chemically altered.

10. Composite part comprising an elongate moulding (1) produced via injection moulding in a mould (5) and comprising an adhesive tape (2), for use as seal or/and protective covering in bodywork of a vehicle, where the adhesive tape (2) has been bonded coherently to the elongate moulding (1) so as to follow a curvature of the elongate moulding (1),
**characterized in that**
the coherent bond between the elongate moulding (1) and the adhesive tape (2) has been produced via direct moulding of the elongate moulding (1) onto the adhesive tape (2) placed in the mould (5).

11. Composite part according to Claim 10,
**characterized in that**
the coherent bond has been formed via a layer (14) which has been bonded to the adhesive tape (2) and which can be chemically altered or/and insipiently melted by the hot injection material.

## Revendications

1. Procédé pour fabriquer une pièce composite comprenant une partie conformée en forme de tige (1) et une bande adhésive (2) pour l'utilisation à titre de joint et/ou de recouvrement dans une carrosserie de véhicule automobile, dans lequel la partie conformée en forme de tige (1) est coulée par injection dans un outil de moulage (5) et l'on établit entre la partie conformée en forme de tige (1) et la bande adhésive (2) une liaison à coopération de matières, dans lequel la bande adhésive (2) est agencée dans l'outil de moulage (5) en formant une portion de paroi (11) qui délimite le compartiment de moulage (9) de l'outil de moulage (5),
**caractérisé en ce que**
la liaison à coopération de matières est établie directement entre la partie conformée en forme de tige (1) et la bande adhésive (2) par surmoulage de la partie conformée en forme de tige (1) sur la bande adhésive (2).

2. Procédé selon la revendication 1,
**caractérisé en ce que** la bande adhésive (2) est mise en place dans l'outil de moulage (5) dans un logement (10) qui retient la bande adhésive (2).

3. Procédé selon la revendication 1 ou 2,
**caractérisé en ce que** la bande adhésive (2) est mise en place dans une gorge ouverte vers le compartiment de moulage (7) de l'outil de moulage (5), en particulier une gorge en contre-dépouille (10).

4. Procédé selon la revendication 3,
**caractérisé en ce que** la gorge en contre-dépouille (10) est rétrécie après la mise en place de la bande adhésive (2) et avant l'injection de la partie conformée en forme de tige (1).

5. Procédé selon la revendication 3 ou 4,
**caractérisé en ce que** la bande adhésive (2) s'enclenche dans la gorge en contre-dépouille (10) lors de sa mise en place.

6. Procédé selon l'une des revendications 3 à 5,
**caractérisé en ce que** la gorge en contre-dépouille (10) est élargie pour le démoulage de la partie conformée en forme de tige (1) reliée à coopération de matières avec la bande adhésive (2).

7. Procédé selon l'une des revendications 1 à 6,
**caractérisé en ce que** lors de la coulée par injection de la partie conformée en forme de tige (1) le matériau est introduit dans le compartiment de moulage (9) à plusieurs emplacements répartis sur la longueur du compartiment de moulage (9).

8. Procédé selon l'une des revendications 1 à 7,
**caractérisé en ce que** lors de la coulée par injection de la partie conformée en forme de tige (1) le matériau est introduit dans le compartiment de moulage (9) en faisant passer le jet d'injection le long de la portion de paroi (11) du compartiment de moulage (9) formée par la bande adhésive (2).

9. Procédé selon l'une des revendications 1 à 8,
**caractérisé en ce que** la portion de paroi (11) du compartiment de moulage (9) formée par la bande adhésive (2) est mise en fusion et/ou modifiée chimiquement lors de la coulée par injection de la partie conformée en forme de tige (1) en établissant la liaison à coopération de matières entre la partie conformée en forme de tige (1) et la bande adhésive (2).

10. Pièce composite, comprenant une partie conformée en forme de tige (1) produite par coulée par injection dans un outil de moulage et une bande adhésive (2), pour l'utilisation à titre de joint et/ou de recouvrement dans une carrosserie de véhicule automobile, dans laquelle la bande adhésive (2) est reliée à coopération de matières avec la pièce conformée en forme de tige (1) en suivant une évolution du cintrage de la pièce conformée en forme de tige (1),
**caractérisée en ce que** la liaison à coopération de matières entre la pièce conformée en forme de tige (1) et la bande adhésive (2) est établie par surmoulage direct de la partie conformée en forme de tige (1) sur la bande adhésive (2) placée dans l'outil de moulage (5).

11. Pièce composite selon la revendication 10,
**caractérisée en ce que** la liaison à coopération de matières est formée par une couche (14), capable de fusion et/ou d'être modifiée chimiquement par le matériau chaud injecté, reliée à la bande adhésive (2).
